# EUROPÄISCHE PATENTSCHRIFT

(11) **EP 1 859 568 B1**
(45) Veröffentlichungstag und Bekanntmachung des Hinweises auf die Patenterteilung: **19.04.2017**
(21) Anmeldenummer: 06706641.5
(22) Anmeldetag: 04.02.2006
(51) Int. Cl.: H04L 12/22, H04L 12/40, H04L 12/413, H04L 29/06

(54) **VERFAHREN ZUR AUTORISIERUNG VON EXTERNEN GERÄTEN**
METHOD FOR AUTHORIZING EXTERNAL DEVICES
PROCÉDÉ D'AUTORISATION D'APPAREILS EXTERNES

(30) Priorität: 12.03.2005 DE 102005011487
(43) Veröffentlichungstag der Anmeldung: 28.11.2007
(73) Patentinhaber: Bayerische Motoren Werke Aktiengesellschaft, 80809 München (DE)
(72) Erfinder: JURK, Reinhard, 82194 Groebenzell (DE)
(74) Vertreter: Bullwein, Fritz
(86) Internationale Anmeldenummer: PCT/EP2006/000981
(87) Internationale Veröffentlichungsnummer: WO 2006/097165

(56) Entgegenhaltungen:
- DE-A1- 10 112 699
- US-A- 5 787 367

## Beschreibung

Die Erfindung bezieht sich auf ein Verfahren zur Autorisierung von wahlweise mit einem Datenbus eines Kraftfahrzeugs verbindbaren externen Geräten, bei welchem zumindest ein erster Code von einem Bediener in ein mit dem Datenbus verbindbares externes Gerät eingebbar ist und von diesem über den Datenbus an eine Autorisierungseinrichtung des Kraftfahrzeugs gesendet wird, der erste Code von der Autorisierungseinrichtung mit einem zweiten Code verglichen wird und im Falle einer Übereinstimmung des ersten Codes mit dem zweiten Code das mit dem Datenbus verbundene Gerät zur Ankopplung an den Datenbus autorisiert wird.

Neue Technologien und Anwendungsszenarien im Automobilbereich beinhalten vielfach die Ankopplung externer Geräte an einen Datenbus eines Kraftfahrzeugs. Ein verbreitetes Beispiel hierfür ist die Ankopplung eines Mobiltelefons an eine Audio-Anlage eines Kraftfahrzeugs. DE10112699 offenbart ein derartiges Verfahren. Unter Nutzung moderner Netzwerktechnologien (z. B. Bluetooth, WLAN) kann eine solche Ankopplung externer Geräte nicht nur leitungsgebunden sondern auch drahtlos stattfinden.

Die Reichweite einer solchen drahtlosen Verbindung erlaubt in vielen Fällen prinzipiell auch die Ankopplung von externen Geräten, welche sich außerhalb des Kraftfahrzeuges befinden. Um eine unbefugte und/oder irrtümliche Ankopplung von externen Geräten zu verhindern, ist daher insbesondere bei der erstmaligen drahtlosen Ankopplung eines externen Geräts an einen zur drahtlosen Ankopplung externer Geräte geeigneten Datenbus die Berechtigung des externen Geräts zur Ankopplung an den Datenbus zu überprüfen.

Für eine solche Autorisierung sind Verfahren bekannt, bei welchen ein mit dem Datenbus verbindbares externes Gerät mit dem Datenbus verbunden wird und über den Datenbus einen ersten Code an eine Autorisierungseinrichtung des Kraftfahrzeugs sendet. Der erste Code wird von der Autorisierungseinrichtung mit einem zweiten Code verglichen. Im Falle einer Übereinstimmung des ersten Codes mit dem zweiten Code wird das mit dem Datenbus verbundene Gerät zur Ankopplung an den Datenbus autorisiert. Im Zusammenhang mit der Bluetooth-Netzwerktechnologie wird ein solches Verfahren zur Autorisierung meist als "Pairing" bezeichnet.

Unter dem Verbinden eines externen Geräts mit einem Datenbus ist im Kontext dieser Anmeldung das Herstellen einer leitungsgebundenen oder drahtlosen Verbindung mit zumindest einem Teilnehmer des Datenbusses zu verstehen. Die Durchführbarkeit einer Datenkommunikation zwischen dem externen Gerät und zumindest einem Teilnehmer des Datenbusses zum Zweck der Umsetzung einer bestimmten Funktionalität ist durch eine solche Verbindung nicht notwendigerweise sichergestellt. Erst eine Ankopplung eines externen Gerätes an den Datenbus erlaubt im Kontext dieser Anmeldung die Durchführung einer Datenkommunikation zwischen dem externen Gerät und zumindest einem Teilnehmer des Datenbusses zum Zweck der Umsetzung einer bestimmten Funktionalität.

Der erste Code bei einem Autorisierungsverfahren der oben beschriebenen Gattung ist typischerweise von einem Bediener in das mit dem Datenbus verbindbare externe Gerät einzugeben. Die Eingabe kann beispielsweise durch die Auswahl eines bestimmten Menüpunkts in der Bedienstruktur des externen Geräts und ein anschließendes Eintippen des Codes auf einer Tastatur des externen Geräts erfolgen.

Den zweiten Code gibt der Bediener typischerweise in die kraftfahrzeugseitige Autorisierungseinrichtung selbst oder in eine der Autorisierungseinrichtung zumindest zu diesem Zweck zugeordnete Eingabeeinrichtung des Kraftfahrzeugs ein. Auch zur Durchführung einer solchen Eingabe ist in der Regel die Auswahl eines bestimmten Menüpunkts in einer Bedienstruktur und ein anschließendes Eintippen des Codes auf einer Tastatur oder mittels eines Drehdruckknopfes erforderlich.

Nachteilig ist bei einem solchen Verfahren, dass die beiden Codes in zweierlei, jeweils aufwändigen und fehleranfälligen, Eingabeprozessen durch den Bediener eingegeben werden müssen. Besonders nachteilig ist, dass die beiden Eingabeprozesse sich auf zwei unterschiedliche Vorrichtungen beziehen, einmal auf das externe Gerät und das andere Mal auf die Autorisierungseinrichtung oder eine dieser zugeordnete Eingabeeinrichtung.

Als Alternative ist es bekannt, einen der beiden Codes, insbesondere den zweiten Code, fest in der jeweiligen Vorrichtung zu speichern. Der Bediener kann den jeweiligen Code dann typischerweise schriftlichen Unterlagen entnehmen, welche der jeweiligen Vorrichtung zugeordnet sind, und muss den Code nur noch in die jeweils andere Vorrichtung eingeben. Dabei ist nachteilig, dass der Bediener die schriftlichen Unterlagen, die aufgrund des Codes gewissen Geheimhaltungsanforderungen unterliegen, im Kraftfahrzeuginneren häufig nicht zur Hand hat. Außerdem kann das Nachschlagen in schriftlichen Unterlagen sehr zeitaufwändig sein und/oder wird von vielen Bedienern als unangenehm empfunden. Im ungünstigsten Fall können die schriftlichen Unterlagen mit dem Code sogar verloren gehen.

Aufgabe der vorliegenden Erfindung ist es, ein einfaches Verfahren der eingangs genannten Gattung zu schaffen, bei welchem von dem Bediener nur ein Code eingegeben werden muss und welches keine schriftliche Niederlegung eines Codes erfordert.

Die Aufgabe wird erfindungsgemäß dadurch gelöst, dass der zweite Code kraftfahrzeugseitig unabhängig von anzukoppelnden externen Geräten festgelegt wird und dass der zweite Code oder ein zu dessen Bestimmung geeigneter Ersatzcode durch eine Ausgabeeinheit im Kraftfahrzeuginneren ausgegeben wird.

Vorzugsweise wird der zweite Code durch die Autorisierungseinrichtung selbst festgelegt.

Der Vorteil eines erfindungsgemäßen Verfahrens liegt darin, dass der Bediener den erfindungsgemäß kraftfahrzeugseitig festgelegten zweiten Code lediglich von der Ausgabeeinheit entgegennehmen, beispielsweise von einer grafischen Anzeigeeinheit ablesen, und diesen als ersten Code in ein zu autorisierendes externes Gerät eingeben muss. Die Autorisierung des externen Geräts erfordert dann nur einen einzigen vom Bediener durchzuführenden Eingabeprozess.

Der Erfindung liegt die Überlegung zugrunde, dass bei einem gattungsgemäßen Verfahren der erste Code und der zweite Code für eine erfolgreiche Autorisierung eines externen Gerätes zwar übereinstimmen müssen, dass der gemeinsame Code aus technischer Sicht jedoch prinzipiell beliebig gewählt werden kann.

Erfindungsgemäß wird der zweite Code kraftfahrzeugseitig zunächst unabhängig von jeglichem externen Gerät festgelegt. Für eine erfolgreiche Autorisierung eines zu autorisierenden externen Geräts muss dann lediglich derselbe Code als erster Code in dieses Gerät eingegeben werden.

Da durch einen Bediener im Fahrzeuginneren in der Regel keine missbräuchliche Ankopplung eines externen Geräts zu erwarten ist, kann der kraftfahrzeugseitig festgelegte zweite Code gefahrlos jedem Fahrzeuginsassen zugänglich gemacht werden. Erfindungsgemäß wird der zweite Code oder ein zu dessen Bestimmung geeigneter Ersatzcode daher durch eine Ausgabeeinheit im Kraftfahrzeuginneren ausgegeben.

Unter einem zur Bestimmung des zweiten Codes geeigneten Ersatzcode ist ein Code zu verstehen, der nicht mit dem zweiten Code identisch ist, aus welchem sich der zweite Code jedoch, gegebenenfalls unter Nutzung entsprechenden Vorwissens, einfach durch den Bediener herleiten lässt. Beispielsweise kann zur Bestimmung eines vierstelligen zweiten Codes ein Ersatzcode mit mehr als vier Stellen, etwa ein sechsstelliger Ersatzcode, an den Bediener ausgebbar sein. Der Bediener kann den zweiten Code dann unter Verwendung des Vorwissens herleiten, dass vier ausgewählte Stellen des Ersatzcodes den zweiten Code bilden.

Zur korrekten Erfassung des zweiten Codes und/oder zu dessen Herleitung aus einem Ersatzcode und/oder zum Auslösen einer entsprechenden Ausgabe einer Ausgabeeinheit kann Vorwissen des Bedieners erforderlich sein. Die Vermittlung solchen Vorwissens an den Bediener kann unter Umständen eine schriftliche Niederlegung entsprechender Information, etwa in einer Bedienungsanleitung, erfordern. Jedoch ist ein derartiges Vorwissen für die meisten Bediener wesentlich einprägsamer als ein Code, weshalb eine einmalige Aufnahme einer entsprechenden Information für die meisten Bediener ausreicht, um in der Zielsituation das entsprechende Vorwissen zu besitzen. Zudem ist eine solche Information nicht fahrzeugspezifisch, erfordert im Gegensatz zu einem Code keinerlei Geheimhaltung und kann in einfacher Weise, etwa beim Händler oder bei einer Service-Einrichtung, in Erfahrung gebracht werden.

Unter Umständen kann einer im Rahmen eines erfindungsgemäßen Autorisierungsverfahrens ausgegebenen Aufforderung eines externen Geräts zur Eingabe eines ersten Codes die Information hinzugefügt werden oder der Aufforderung zu entnehmen sein, wie der kraftfahrzeugseitig festgelegte zweite Code oder ein zur Bestimmung des zweiten Codes geeigneter Ersatzcode abrufbar ist bzw. wie sich der für eine erfolgreiche Autorisierung erforderliche erste Code aus einem ausgegebenen Ersatzcode ergibt.

Gemäß einer bevorzugten Ausführungsform der vorliegenden Erfindung wird der zweite Code kraftfahrzeugseitig zeitvariabel festgelegt. Dies birgt beispielsweise den zusätzlichen Vorteil, dass ein Ausspionieren des Codes durch unbefugte Personen zusätzlich erschwert wird. Auch eine zustands- und/oder situationsabhängige Festlegung ist im Sinne der vorliegenden Erfindung als zeitvariable Festlegung zu verstehen.

Gemäß verschiedener Ausführungsformen der Erfindung kann es erforderlich sein, dass der Bediener eine oder mehrere Bedienaktionen ausführt, um eine Ausgabe des zweiten Codes durch die Ausgabeeinheit auszulösen. Beispielsweise kann es erforderlich sein, einen Bordcomputer auf einen bestimmten Anzeigemodus einzustellen oder einen bestimmten Menüpunkt in der Bedienstruktur eines menübasierten multifunktionalen Bediensystems aufzurufen.

Zur kraftfahrzeugseitigen Festlegung des zweiten Codes sind unterschiedliche Verfahren denkbar. Beispielsweise ist es denkbar, dass der zweite Code aus einer im Kraftfahrzeug gespeicherten Betriebsgröße bestimmt wird. In den meisten Fällen bedingt eine solche Festlegung automatisch eine Zeitvariabilität des zweiten Codes.

Der Vorteil einer solchen Ausführungsform eines erfinderischen Verfahrens liegt darin, dass viele Betriebsgrößen des Kraftfahrzeugs ohnehin im Kraftfahrzeug gespeichert und/oder in einfacher Weise bestimmbar sind. Dabei ist es vorteilhaft, dass für die praktische Umsetzung der Erfindung keine spezielle Speichereinheit zur Speicherung des zweiten Codes und/oder keine speziellen Mittel und/oder Verfahrensschritte zur Bestimmung des zweiten Codes vorgesehen werden müssen. Je nach Ausführungsform der Erfindung kann jedoch auch ohne die zwingende Notwendigkeit bewusst eine Speichereinheit zur Speicherung des zweiten Codes vorgesehen werden.

Im Falle eines zeitvariabel festgelegten zweiten Codes, welcher in einer Speichereinheit abgelegt wird, ist der Inhalt einer solchen Speichereinheit entsprechend zeit- oder ereignisgesteuert zu aktualisieren.

Gemäß einer besonders vorteilhaften Ausführungsform der Erfindung wird zur Bestimmung des zweiten Codes eine Betriebsgröße des Kraftfahrzeugs verwendet, welche zu zumindest einem weiteren, insbesondere einem von der Autorisierung externer Geräte unabhängigen, Zweck durch eine Ausgabeeinheit des Kraftfahrzeugs ausgebbar ist. Im Falle einer solchen Ausführungsform ist die praktische Umsetzung der Erfindung mit besonders geringem Aufwand realisierbar, da hierfür weder eine erfindungsspezifische Ausgabeeinheit noch eine erfindungsspezifische Möglichkeit zur Ausgabe des zweiten Codes oder eines Ersatzcodes geschaffen werden muss.

Gemäß bevorzugter Ausführungsformen der Erfindung wird der kraftfahrzeugseitig festgelegte zweite Code oder ein zu dessen Bestimmung geeigneter Ersatzcode dem Bediener auf möglichst komfortable Art und Weise zugänglich gemacht. Gemäß einer besonders bevorzugten Ausführungsform der Erfindung wird der zweite Code oder ein entsprechender Ersatzcode ohne die Notwendigkeit einer Bedienaktion des Bedieners von einer Ausgabeeinheit im Kraftfahrzeuginneren ausgegeben.

Insbesondere ist es denkbar, dass der zweite Code durch die Autorisierungsvorrichtung aus dem Kilometerstand des Kraftfahrzeugs bestimmt wird. Der Kilometerstand, welcher zumindest während des Fahrbetriebs des Kraftfahrzeugs typischerweise im Blickfeld des. Fahrers angezeigt wird, dient dem Bediener dann zur Bestimmung des zweiten Codes. Zu dessen Ausgabe ist keine Bedienaktion des Bedieners notwendig.

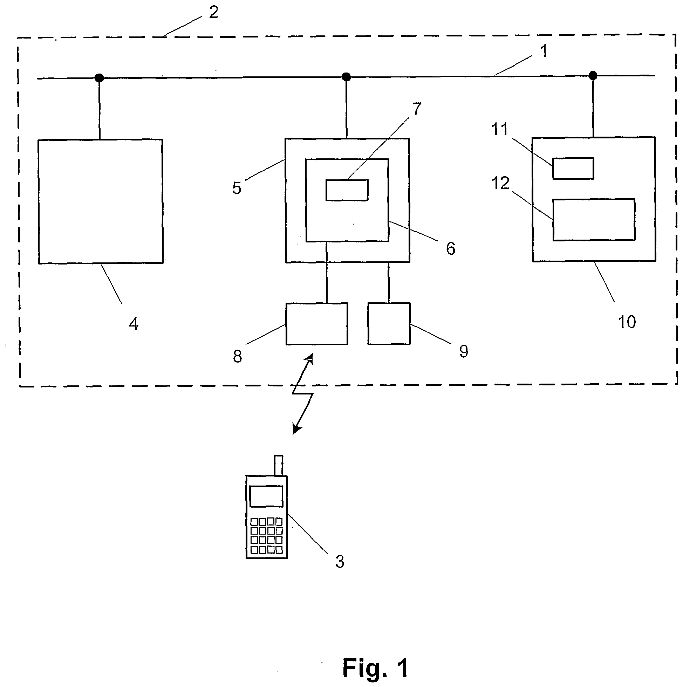

Anhand der einzigen beigefügten Zeichnung wird die Erfindung im Folgenden weiter erläutert. Dabei zeigt die Zeichnung schematisch eine zur Durchführung eines erfindungsgemäßen Verfahrens geeignete Vorrichtung.

Das wahlweise mit einem Datenbus 1 eines Kraftfahrzeugs 2 verbindbare externe Gerät 3, hier ein Mobiltelefon, soll mit dem Datenbus 1 verbunden und an diesen angekoppelt, also zur Datenkommunikation mit zumindest einem Teilnehmer des Datenbusses 1 zum Zweck der Umsetzung einer bestimmten Funktionalität autorisiert, werden.

Im vorliegenden Ausführungsbeispiel sind durch die Ankopplung die Teilfunktionalitäten einer Freisprechfunktionalität für das Mobiltelefon 3 zu realisieren. Dem Mobiltelefon 3 muss hierzu die Datenkommunikation mit verschiedenen Teilnehmern des Datenbusses 1 ermöglicht werden.

An den Datenbus 1 sind eine Audio-Anlage 4 und eine Freisprecheinrichtung 5 angeschlossen, welche ein Kopplungsmodul 6 mit integriertem Codespeicher 7 enthält. Das Kopplungsmodul 6 ist mit einer Antenne 8 zur Datenkommunikation zwischen dem Kopplungsmodul und wahlweise verbindbaren externen Geräten verbunden. An die Freisprecheinrichtung 5 ist zudem ein Mikrofon 9 angeschlossen.

Ferner ist an den Datenbus ein Instrumentenkombi 10 angeschlossen, welches eine Speichereinheit 11 enthält, in welcher der Kilometerstand des Kraftfahrzeugs 2 gespeichert ist. Das Instrumentenkombi 10 enthält zudem eine Anzeigeeinheit 12, in welcher zumindest während des Fahrbetriebs des Kraftfahrzeugs 2 permanent der Kilometerstand des Kraftfahrzeugs 2 angezeigt wird.

Die Freisprecheinrichtung 5 erlaubt zur Umsetzung verschiedener Teilfunktionalitäten einer Freisprechfunktionalität verschiedene Varianten einer Datenkommunikation zwischen einem autorisierten externen Gerät und der Freisprecheinrichtung 5 bzw. zwischen einem autorisierten externen Gerät und einem anderen Teilnehmer des Datenbusses 1. Beispielsweise ist die Freisprecheinrichtung 5 geeignet, eine Datenkommunikation zwischen einem autorisierten externen Gerät und der Audio-Anlage 4 über den Datenbus 1 zu vermitteln. Ferner ist die Freisprecheinrichtung 5 geeignet, eine Bedienung ausgewählter Funktionen eines autorisierten externen Geräts über hier nicht im Einzelnen dargestellte Bedienelemente des Kraftfahrzeugs 2, welche über den Datenbus 1 mit der Freisprecheinrichtung 5 verbunden sind, zu vermitteln. Außerdem erlaubt die Freisprecheinrichtung 5 die Aufnahme von Tonsignalen über das Mikrofon 9 und deren Weiterleitung an ein autorisiertes externes Gerät.

Das Kopplungsmodul 6 der Freisprecheinrichtung 5 ist prinzipiell zur Ankopplung externer Geräte zum Zweck der Datenkommunikation mit einem oder mehreren Teilnehmern des Datenbusses 1, beispielsweise zur Realisierung der oben genannten Teilfunktionalitäten, geeignet. Die Ankopplung erfordert jedoch eine Autorisierung des jeweiligen externen Geräts durch das Kopplungsmodul 6. Das Kopplungsmodul 6 fungiert im vorliegenden Ausführungsbeispiel kraftfahrzeugseitig also als Autorisierungseinrichtung im Sinne der Erfindung. Gemäß alternativer, hier nicht näher beschriebener, Ausführungsformen der Erfindung kann auch eine eigenständige oder mit anderen Funktionen gekoppelte Autorisierungsvorrichtung vorgesehen sein.

Im vorliegenden Ausführungsbeispiel ist das Kopplungsmodul 6 zumindest bei eingeschalteter Zündung des Kraftfahrzeugs 2 jederzeit zur Ankopplung bzw. Autorisierung kopplungsbereiter externer Geräte bereit.

Zur erfolgreichen Autorisierung eines externen Geräts 3 muss dieses zusammen mit einer Gerätekennung einen ersten Code an das Kopplungsmodul 6 senden. Dieser erste Code wird durch das Kopplungsmodul 6 auf Übereinstimmung mit einem in dem Codespeicher 7 gespeicherten zweiten Code geprüft. Wenn die beiden Codes übereinstimmen, wird das externe Gerät 3 zur Ankopplung an den Datenbus 1 und zur Durchführung der oben genannten Teilfunktionalitäten der Freisprechfunktionalität autorisiert.

In dem Codespeicher 7 des Kopplungsmoduls 6 ist als Vergleichsbasis ein zeitvariabler zweiter Code gespeichert. Dieser zweite Code wird durch das Kopplungsmodul 6 bestimmt, indem dieses über den Datenbus 1 den Kilometerstand des Kraftfahrzeugs 2 aus der Speichereinheit 10 ausliest und dessen letzte vier Stellen als zweiten Code im Codespeicher 7 ablegt. Die Aktualisierung des Codespeichers 7 kann zeitgesteuert, beispielsweise in regelmäßigen Zeitabständen, oder ereignisgesteuert, beispielsweise nach dem Erhalt einer Autorisierungsanfrage durch ein externes Gerät, erfolgen.

Die Autorisierung eines externen Geräts 3 zur Ankopplung an den Datenbus 1 kann unter Nutzung der beschriebenen Vorrichtungen folgendermaßen erfolgen:
- Zunächst wird das externe Gerät 3 durch den Bediener mit dem Kopplungsmodul 6 verbunden. Im vorliegenden Ausführungsbeispiel erfolgt die Verbindung auf Basis der Bluetooth-Netzwerktechnologie. Das externe Gerät wird dazu in eine Reichweite von wenigen Metern der Antenne 8, vorzugsweise ins Kraftfahrzeuginnere, gebracht.
- Das externe Gerät 3 erkennt automatisch die Kopplungsbereitschaft des Kopplungsmoduls 6 und fordert den Bediener zur Eingabe eines ersten Codes auf. Gegebenenfalls wird der Aufforderung die Information hinzugefügt, dass sich der für eine erfolgreiche Autorisierung erforderliche erste Code aus den letzten vier Stellen des aktuellen Kilometerstandes des Kraftfahrzeuges ergibt.
- Nach der Eingabe des ersten Codes durch den Bediener wird dieser von dem externen Gerät 3 zusammen mit einer Gerätekennung an das Kopplungsmodul 6 gesendet.
- Das Kopplungsmodul 6 vergleicht den ersten Code mit dem im Codespeicher 7 abgelegten zweiten Code und autorisiert im Falle einer Übereinstimmung beider Codes das externe Gerät 3 für die weiter oben genannten Teilfunktionalitäten der Freisprechfunktionalität.

Die Autorisierung des externen Geräts 3 erfordert für den Bediener lediglich das Ablesen der letzten vier Stellen des Kilometerzählers von der Anzeigeeinheit 12 und die Eingabe derselben in das externe Gerät 3.

Zur Ausgabe des Kilometerstands ist keine Bedienaktion des Bedieners notwendig. Zudem wird der Kilometerstand unabhängig von der Autorisierung externer Geräte zur Information des Fahrers durch die Anzeigeeinheit 12 angezeigt. Insofern ist für die Realisierung des beschriebenen Autorisierungsverfahrens keine dedizierte Anzeigeeinheit vorzusehen.

Sofern das externe Geräts nicht zur automatischen Erkennung eines in seiner Reichweite befindlichen kopplungsbereiten Kopplungsmoduls 6 geeignet ist, kann es erforderlich sein, das externe Gerät 3 in an sich bekannter Weise in einen speziellen Betriebsmodus zur Erkennung kopplungsbereiter Geräte zu versetzen.

Im vorliegenden Ausführungsbeispiel ist aus Gründen der Anschaulichkeit ein Codespeicher 7 und ein Vorhalten des gespeicherten zweiten Codes bei dem Kopplungsmodul 6 vorgesehen. Alternativ kann der zweite Code erst während eines Autorisierungsvorganges, beispielsweise nach dem Empfang einer Autorisierungsanfrage eines externen Gerät bestimmt und mit einem von dem externen Gerät gesendeten ersten Code verglichen werden.

Im Rahmen der obigen Beschreibung wird zu Gunsten einer verständlichen Darstellung nicht auf die Möglichkeit der Verschlüsselung von Codes, beispielsweise bei deren Speicherung und Übertragung, eingegangen. Sofern eine solche Verschlüsselung in an sich bekannter Weise erfolgt, schließt der erfinderische Gedanke eine solche Verschlüsselung jedoch mit ein. Die Verschlüsselung kann sich auf den ersten Code oder den zweiten Code oder beide Codes beziehen.

## Patentansprüche

1. Verfahren zur Autorisierung von wahlweise mit einem Datenbus (1) eines Kraftfahrzeugs (2) verbindbaren externen Geräten, bei welchem zumindest ein erster Code von einem Bediener in ein mit dem Datenbus verbindbares externes Gerät (3) eingebbar ist und von diesem über den Datenbus an eine Autorisierungseinrichtung (6) des Kraftfahrzeugs gesendet wird, der erste Code von der Autorisierungseinrichtung mit einem zweiten Code verglichen wird und im Falle einer Übereinstimmung des ersten Codes mit dem zweiten Code das mit dem Datenbus verbundene Gerät zur Ankopplung an den Datenbus autorisiert wird,
**dadurch gekennzeichnet,**
**dass** der zweite Code kraftfahrzeugseitig zeitvariabel unabhängig von dem externen Gerät aus einer im Kraftfahrzeug gespeicherten Betriebsgröße bestimmt wird und
**dass** der zweite Code oder ein zu dessen Bestimmung geeigneter Ersatzcode durch eine Ausgabeeinheit (12) im Kraftfahrzeuginneren an den Fahrer des Kraftfahrzeugs ausgegeben wird.

2. Verfahren nach Anspruch 1, **dadurch gekennzeichnet,**
**dass** der zweite Code durch die Autorisierungseinrichtung festgelegt wird.

3. Verfahren nach Anspruch 1, **dadurch gekennzeichnet,**
**dass** die Betriebsgröße zu zumindest einem von der Autorisierung externer Geräte unabhängigen Zweck durch eine Ausgabeeinheit des Kraftfahrzeugs ausgebbar ist.

4. Verfahren nach einem der Ansprüche 1 bis 3, **dadurch gekennzeichnet,**
**dass** der zweite Code oder ein entsprechender Ersatzcode ohne die Notwendigkeit einer Bedienaktion des Bedieners ausgegeben wird.

5. Verfahren nach einem der Ansprüche 1 bis 4, **dadurch gekennzeichnet,**
**dass** der zweite Code aus dem Kilometerstand des Kraftfahrzeugs bestimmt wird.

## Claims

1. A method for authorising external devices which can be optionally connected to a data bus (1) of a motor vehicle (2), in which method at least one first code can be input by an operator into an external device (3) which can be connected to the data bus and is sent by the external device via the data bus to an authorisation device (6) of the motor vehicle, the authorisation device compares the first code to a second code and, if the first code corresponds to the second code, the device connected to the data bus is authorised to couple to the data bus, **characterised in that** the second code is determined from an operating variable stored in the motor vehicle on the vehicle side in a time-variable manner, independently of the external device, and **in that** the second code or a substitute code, suitable for the determination thereof, is output to the driver of the motor vehicle by an output unit (12) inside the motor vehicle.

2. A method according to claim 1, **characterised in that** the second code is fixed by the authorisation device.

3. A method according to claim 1, **characterised in that** the operating variable can be output by an output unit of the motor vehicle for at least one purpose which is independent of the authorisation of external devices.

4. A method according to any of claims 1 to 3, **characterised in that** the second code or a corresponding substitute code is output without requiring an operating action by the operator.

5. A method according to any of claims 1 to 4, **characterised in that** the second code is determined from the kilometre reading of the motor vehicle.

## Revendications

1. Procédé d'autorisation d'appareils externes pouvant être sélectivement reliés à un bus de données (1) d'un véhicule (2) selon lequel au moins un premier code peut être entré par un utilisateur dans un appareil externe (3) pouvant être relié au bus de données, et transmis par celui-ci par l'intermédiaire du bus de données à un dispositif d'autorisation (6) du véhicule, le premier code est comparé par le dispositif d'autorisation avec un second code, et en cas de concordance du premier code avec le second code, l'appareil relié avec le bus de données est autorisé à être couplé au bus de données,
**caractérisé en ce que**
le second code est déterminé, côté véhicule de façon variable dans le temps indépendamment de l'appareil externe, à partir d'une grandeur de fonctionnement enregistrée dans le véhicule, et
le second code ou un code de remplacement adapté pour sa détermination est délivré par une unité de sortie (12) à la partie interne du véhicule au conducteur de celui-ci.

2. Procédé conforme à la revendication 1,
**caractérisé en ce que**
le second code est fixé par le dispositif d'autorisation.

3. Procédé conforme à la revendication 1,
**caractérisé en ce que**
la grandeur de fonctionnement peut être délivrée dans au moins un but indépendant de l'autorisation d'appareils externes par une unité de sortie du véhicule.

4. Procédé conforme à l'une des revendications 1 à 3,
**caractérisé en ce que**
le second code ou un code de remplacement correspondant est délivré sans nécessiter une action de manoeuvre de l'utilisateur.

5. Procédé conforme à l'une des revendications 1 à 4,
**caractérisé en ce que**
le second code est déterminé à partir de l'état kilométrique du véhicule.
